# EUROPÄISCHE PATENTSCHRIFT

(11) **EP 0 648 955 B1**
(45) Veröffentlichungstag und Bekanntmachung des Hinweises auf die Patenterteilung: **12.03.1997**
(21) Anmeldenummer: 94109953.3
(22) Anmeldetag: 28.06.1994
(51) Int. Cl.: F16F 15/123, F16F 15/129

(54) **Kupplungsscheibe mit Lastreibscheiben**
Clutch disc with load active friction discs
Disque d'embrayage à disques de friction actifs sous charge

(30) Priorität: 15.10.1993 DE 4335211
(43) Veröffentlichungstag der Anmeldung: 19.04.1995
(73) Patentinhaber: FICHTEL & SACHS AG, D-97424 Schweinfurt (DE)
(72) Erfinder: Wack, Erwin, Dipl.-Ing. (FH), D-97464 Niederwerrn (DE)

(56) Entgegenhaltungen:
- EP-A- 0 475 283
- EP-A- 0 502 529
- GB-A- 2 210 435
- GB-A- 2 254 398

## Beschreibung

Die Erfindung bezieht sich auf eine Kupplungsscheibe gemäß dem Oberbegriff des Anspruchs 1.

Durch die zur Bildung des Oberbegriffs des Anspruchs 1 herangezogene DE 40 28 616 A1 oder durch die korrespondierende EP-A-0 475 283 ist, wie in den Figuren 5 bis 7 dargestellt, eine Kupplungsscheibe bekannt, die aus einer zu einer Drehachse konzentrischen Nabe mit Nabenscheibe, einem auf der einen Seite der Nabenscheibe angeordneten Belagträger für die Reibbeläge und einem auf der anderen Seite der Nabenscheibe angeordneten Deckblech, das mit dem Belagträger drehfest verbunden ist, versehen ist. In Fenstern der Nabenscheibe einerseits sowie von Belagträger und Deckblech andererseits sind Schraubenfedern für den Lastbereich angeordnet, die mit einem Ende an Steuerkanten von Belagträger und Deckblech, mit dem anderen Ende dagegen an Anschlaglappen von beidseitig der Nabenscheibe angeordneten Lastreibscheiben anliegen, an denen Stege zur Aufnahme je eines der Anschlaglappen an einem ringförmigen Grundkörper vorgesehen sind. Die Lastreibscheiben sind drehfest miteinander verbunden, folgen bei Leerlaufbetrieb dem Belagträger sowie dem Deckblech reibschlüssig und werden bei Lastbetrieb über die Anschlaglappen mittels der Schraubenfedern jeweils an der zugeordneten Steuerkante des entsprechenden Fensters zur Anlage gebracht. Daraufhin nehmen die Lastreibscheiben an der Nabenbewegung teil, und führen eine Relativbewegung gegenüber dem Belagträger und dem Deckblech aus. Da eine der Lastreibscheiben durch eine in axialer Richtung wirkende Feder mit einer Reibkraft beaufschlagt wird und diese Axialkraftbeaufschlagung an die andere Lastreibscheibe übertragen wird, bewirken beide Lastreibscheiben eine bei Lastbetrieb wirksame Reibkraft.

Beim Auftreffen eines Anschlaglappens an der zugeordneten Steuerkante muß dieser, auf seiner gegenüberliegenden Seite durch die im betreffenden Fenster angeordnete Feder belastet, an beiden Wirkflächen jeweils eine Kraft aufnehmen. Da die Lastreibscheibe bei Lastbetrieb der Bewegung der Nabenscheibe folgend, an deren Taumelbewegung teilnimmt, kann der Anschlaglappen in eine Stellung relativ zu der Steuerkante bewegt werden, in welcher die an seinen Wirkflächen anliegenden Kräfte bezogen auf den den Anschlaglappen mit dem restlichen Teil der Lastreibscheibe verbindenden Steg mit unterschiedlichen Hebelarmen übertragen werden. Dadurch entsteht ein auf den Anschlaglappen einwirkendes Drehmoment, das zum Aufbau von Spannungen in dem besagten Steg führt. Diese Spannungen können so hoch werden, daß sie einen Bruch im Bereich des Stegs auslösen. Um dies zu verhindern, werden die Anschlaglappen an derartigen Lastreibscheiben üblicherweise einer festigkeitserhöhenden Wärmebehandlung unterzogen. Diese ist allerdings aufwendig und teuer.

Der Erfindung liegt die Aufgabe zugrunde, Lastreibscheiben an einer Kupplungsscheibe so auszubilden, daß auch bei ungünstiger Stellung des jeweiligen Anschlaglappens relativ zu einer zugeordneten Steuerkante die Spannungen, die durch ein über die anliegenden Kräfte eingeleitetes Drehmoment erzeugt werden, begrenzbar sind.

Diese Aufgabe wird erfindungsgemäß durch den Kennzeichenteil des Anspruchs 1 gelöst. Durch die einstückige Ausbildung mit dem Steg und der Verstrebung erhöht sich die Steifigkeit des Anschlaglappens erheblich, da sich dieser an den besagten Elementen abstützen kann. Außerdem ist dadurch zumindest ein Teil der eingeleiteten Kräfte auf diese Elemente übertragbar, so daß die im Anschlaglappen auftretenden Spannungen relativ gering sind und eine Verteilung aufweisen, der bauteilschädigende Spannungsspitzen fehlen. Außerdem wird, da zwischen dem Anschlaglappen und der Verstrebung einerseits und zwischen dem Anschlaglappen und dem Steg andererseits keine Unterbrechung vorliegt, das Auftreten einer Kerbspannung, die ebenfalls ein Losbrechen des Anschlaglappens von der restlichen Lastreibscheibe bewirken könnte, verhindert.

Durch Ausbildung des Anschlaglappens mit einem elastisch verformbaren Bereich sind Kräfte federnd aufnehmbar, so daß die Einleitung harter Schläge auf den Anschlaglappen vermeidbar ist, und andererseits wird gerade an derjenigen Stelle des Anschlaglappens, an der die Kräfte anliegen, der letztgenannte durch den in Umfangsrichtung des ringförmigen Grundkörpers von dem elastisch verformbaren Bereich beabstandeten Bereich der Verstrebung durch eine Querschnittsverstärkung zusätzlich versteift. Dadurch wird die Gefahr eines Bruchs am Anschlaglappen weiter reduziert.

Durch die Maßnahme nach Anspruch 2 werden die Kräfte auf denjenigen Bereich des Anschlaglappens geleitet, in dem dieser durch seine Abstützung an Steg und Verstrebung einerseits und durch die Querschnittsverstärkung andererseits die größte Stabilität aufweist.

In Anspruch 3 ist angegeben, wie der Anschlaglappen ausgebildet sein muß, um bei bestmöglicher Abstützung seine Federwirkung optimal entfalten zu können. Durch die winklige Anordnung der beiden Teile des Anschlaglappens können diese eine Relativbewegung zueinander ausführen, die aufgrund des Verformungswiderstandes des für den Anschlaglappen verwendeten Materials über die notwendige Dämpfung verfügt. Aufgrund des elastischen Verhaltens des Materials erfolgt nach Aufhebung der Krafteinleitung ein Ausfedern der beiden Teile in ihre Anfangsstellung. Während in Anspruch 3 der für diese Funktion mögliche Winkelbereich beansprucht ist, gibt Anspruch 4 den hierfür am besten geeigneten Winkelbereich an, da zwar ein Federweg zur Verfügung steht, dieser aber zugunsten eines nicht allzu weichen Verhaltens des Anschlaglappens sehr kurz ist. Bei diesem Winkel verlaufen die beiden Teile des Anschlaglappens nahezu parallel zueinander.

In Anspruch 5 ist eine vorteilhafte Weiterbildung für die Verstrebung angegeben, wodurch diese für eine zweite Funktion verwendbar ist.

Die Erfindung wird anhand eines Ausführungsbeispieles näher erläutert. Es zeigen im einzelnen:
- Fig. 1: den Längsschnitt durch eine komplette Kupplungsscheibe
- Fig. 2: einen Schnitt gemäß Fig. 1 mit einer Lastreibscheibe
- Fig. 3: die Lastreibscheibe vergrößert herausgezeichnet.

Die Kupplungsscheibe 1 ist folgendermaßen aufgebaut:

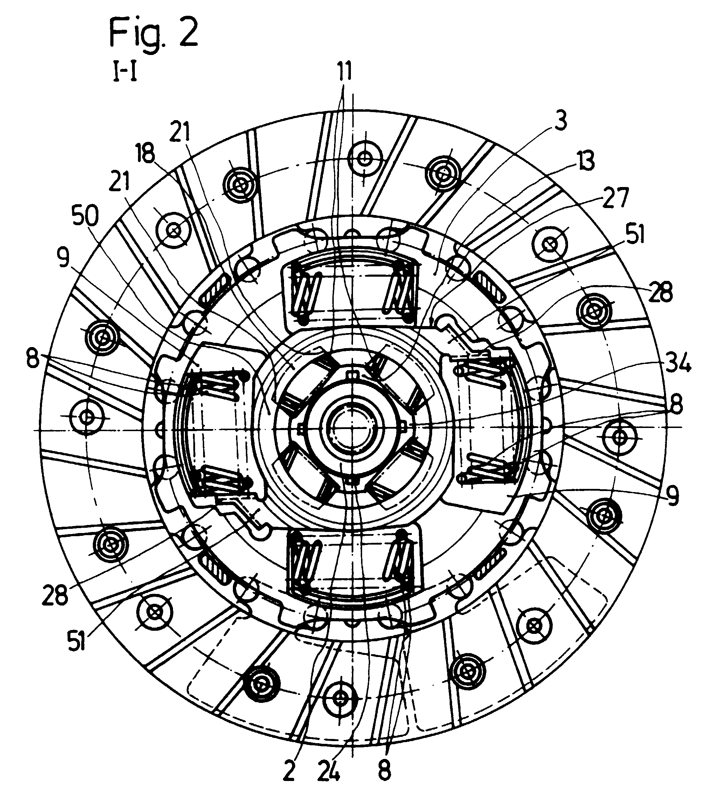

Eine Nabe 2 mit sich nach radial außen erstreckender Nabenscheibe 3 ist rotationssymmetrisch zu einer Drehachse 33 aufgebaut und weist eine Innenverzahnung zum drehfesten Aufsetzen auf eine nicht dargestellte Getriebewelle auf. Die Nabenscheibe 3 weist auf zwei unterschiedlichen Durchmessern Fenster 9 und 12 auf. Die Fenster 12 sind auf einem kleineren Durchmesser angeordnet und dienen der Aufnahme von Schraubenfedern 11 für den Leerlaufbereich. Die Fenster 9 sind dagegen zur Aufnahme von Schraubenfedern 8 für den Lastbereich vorgesehen. Zu beiden Seiten der Nabenscheibe 3 ist ein Belagträger 4 bzw. ein Deckblech 6 angeordnet, wobei beide über Verbindungsniete 7 drehfest miteinander verbunden und auf Abstand gehalten sind. Der Belagträger 4 trägt in seinem radial äußeren Bereich nicht dargestellte, auf übliche Weise ausgebildete Reibbeläge und weist ebenso wie das Deckblech 6 Fenster 10 zur Aufnahme der Schraubenfedern 8 auf. Auf dem zylindrischen Außendurchmesser 17 der Nabe 2 ist zu beiden Seiten der Nabenscheibe 3 je ein Führungsteil 13 drehbar aufgesetzt, von denen jedes in seinem radial inneren Bereich einen Bund 19 aufweist, der im verbauten Zustand von der Nabenscheibe 3 wegweist. Jedes Führungsteil 13 erstreckt sich radial in den Raum zwischen Nabenscheibe 3 und Belagträger 4 bzw. Deckblech 6 hinein, und zwar etwa bis zum Innendurchmesser des Hüllkreises der Schraubenfedern 8 für den Lastbereich. Jedes Führungsteil 13 weist in dem der Nabenscheibe 3 zugewandten Bereich mehrere am Umfang verteilte Taschen 18 auf, die, wie aus Fig. 2 ersichtlich, umfangsmäßig durch Steuerkanten 21 begrenzt sind, wobei über diese Steuerkanten 21 die Schraubenfedern 11 für den Leerlaufbereich angesteuert werden. Jeder Bund 19 weist - am Umfang verteilt - mehrere Nasen 24 auf, die nach radial außen weisen und in Belagträger 4 und Deckblech 6 mit entsprechenden Aussparungen ohne Spiel in Umfangsrichtung eingreifen. Auf diese Weise sind beide Führungsteile 13 drehfest mit Belagträger 4 bzw. Deckblech 6 verbunden.

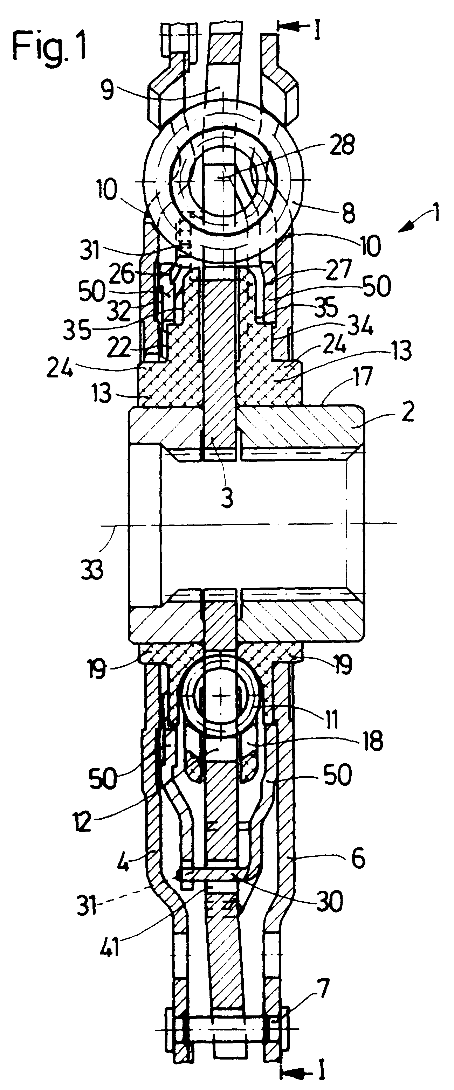

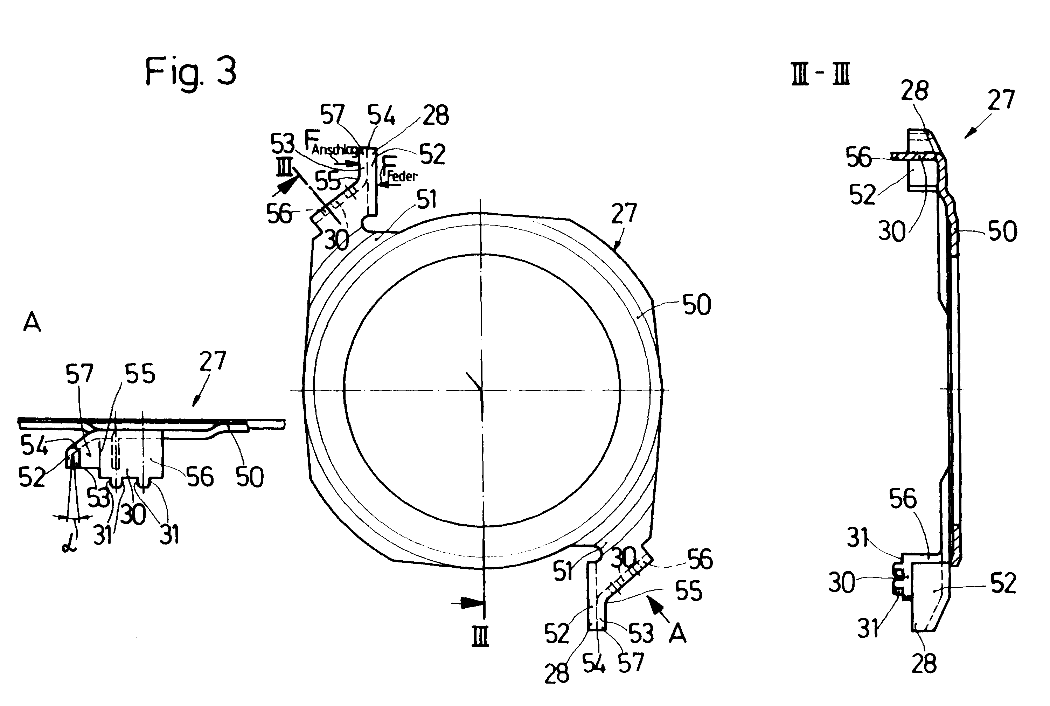

Sich an den Außendurchmesser der Nasen 24 der Führungsteile 13 anschließend und etwas eingerückt ist eine radial verlaufende Fläche 34 (Fig. 1) vorgesehen, die gegenüber dem Deckblech 6 als Anlagefläche dient und die auf der gegenüberliegenden Seite zur Anlage einer Feder 22 dient. Angrenzend an die Fläche 34 ist nach radial außen ein Absatz 35 ausgebildet, der bei beiden Führungsteilen 13 dazu vorgesehen ist, die umlaufenden Grundkörper 50 von Lastreibscheiben 26 bzw. 27 aufzunehmen. In Fig. 3 ist die Lastreibscheibe 27 vergrößert ausgezeichnet. Am Grundkörper 50 sind, diagonal gegenüberliegend, Stege 51 angeformt, an denen jeweils ein Anschlaglappen 28 aufgenommen ist. Die Anschlaglappen 28 werden dadurch gebildet, daß der Steg 51 seitlich umgebogen ist, so daß ein nahezu rechtwinklig hierzu verlaufender Lappenteil 52 entsteht. Das radial äußere Ende des Stegs 51 ist unterdessen entlang eines Bereichs seiner Breite zur Bildung einer axialen Abstützung 30 vorgesehen, die an ihrem freien Ende mit Anschlägen 31 ausgebildet ist, die, nach Durchdringung von Öffnungen 41 (Fig. 1) in der Nabenscheibe 3, auf entsprechenden Teilen der Lastreibscheibe 26 ohne Spiel in Umfangsrichtung aufliegen und somit eine drehfeste Verbindung der beiden Lastreibscheiben 26,27 sicherstellen.

An der dem Lappenteil 52 (Fig.3) zugewandten Seite der Abstützung 30 verläuft ein weiterer Bereich des Stegs 51 derart gebogen, daß ein zweiter Lappenteil 53 gebildet wird, dessen Erstreckungsebene nahezu parallel zu derjenigen des ersten Lappenteils 52 verläuft. Der Lappenteil 52 ist über eine erste Biegekante 54 mit dem Lappenteil 53 und über eine weitere Biegekante 55 mit dem Steg 51 verbunden, wobei er sich über die Biegekante 54 an dem Steg 51 und über die Biegekante 55 an der Abstützung 30 abstützt, die als Verstrebung 56 für die Lappenteile 52 und 53 und damit für den Anschlaglappen 28 wirksam ist.

Da die Erstreckungsebenen der Lappenteile 52 und 53 nicht völlig parallel verlaufen, verbleibt zwischen diesen ein kleiner Winkel , der bei Krafteinleitung durch die Feder 8, die an dem Lappenteil 52 an einem radial über die Verstrebung 56 hinausragenden Bereich zur Anlage kommt, eine elastische Ausweichbewegung desselben in Richtung zum zweiten Lappenteil 53 zuläßt, so daß es die Kraft federnd aufnehmen kann. Sobald der Lappenteil 52 nach einer Ausweichbewegung an dem Lappenteil 53 anschlägt, ist der letztgenannte als kraftaufnehmende Querschnittsverstärkung 57 für den Lappenteil 52 und damit für den Anschlaglappen 28 wirksam.

Zwischen der Lastreibscheibe 26 und dem Belagträger 4 ist eine Feder 32 angeordnet, die zur Erzeugung der Reibkraft für den Lastbereich vorgesehen ist. Die Feder 32 wirkt auf die Lastreibscheibe 26 ein, welche die Axialkraftbeaufschlagung über die Abstützungen 30 an die Lastreibscheibe 27 weitergibt. Dadurch kann die Kraft der Feder 32 auf die gegenüberliegende Lastreibscheibe 27 übertragen werden, welche sich mit ihrem Grundkörper 50 an der Innenseite des Deckblechs 6 abstützt.

Die prinzipielle Wirkungsweise ist nun die, daß im Leerlaufbereich zur Beaufschlagung der Federn 11 eine Reibkraft hinzukommt, die sich aus der Kraft der Feder 22 und aus der Reibung zwischen den beiden Führungsteilen 13 und der Nabenscheibe 3 ergibt. Die Führungsteile 13 sind in ihren mit der Nabenscheibe 3 zusammenwirkenden Reibbereichen so geformt, daß nur im radial inneren Bereich eine direkte Berührung stattfindet und somit der wirksame Reibradius klein gehalten ist. Beim Überschreiten des Leerlaufbereiches, das heißt, beim Kontakt der Anschlaglappen 28 der Lastreibscheibe 27 an der entsprechenden Steuerkante der Fenster 9 in der Nabenscheibe 3 für die betreffenden Federn 8, werden beide Lastreibscheiben 26 und 27 gegenüber der Nabenscheibe 3 festgehalten und es ergibt sich so eine Relativbewegung dieser beiden Lastreibscheiben gegenüber dem Belagträger 4 bzw. dem Deckblech 6. Die hierbei erzeugte Reibkraft ist abhängig von der Werkstoffpaarung und der Kraft der Feder 32. Im Lastbereich setzt sich somit die Reibkraft zusammen aus der bereits im Leerlaufbereich wirksamen Reibung und der Reibung durch die beiden Lastreibscheiben 26 und 27. Es ist somit möglich, die beiden Reibkräfte völlig unabhängig voneinander einzustellen. Die Anschlaglappen 28 liegen dabei an zwei Federn 8 an, die in gleichen Fenstern 9 der Nabenscheibe 3 und in gleichen Fenstern 10 von Belagträger 4 und Deckblech 6 angeordnet sind. Hervorzuheben ist, daß beide Anschlaglappen 28 jeweils am wirkungsmäßig gleichen Stirnende der entsprechenden Feder 8 anliegen. Damit ergibt sich im vorliegenden Fall ein Reibkrafteinsatz im Lastbereich, der nur in der einen Drehrichtung wirksam ist, beispielweise bei Schubbeanspruchung, und in der anderen Drehrichtung durch Fehlen entsprechender Anschlaglappen unwirksam bleibt. Die Funktion kann mit Hilfe der Fig. 2 folgendermaßen erklärt werden: Es wird angenommen, daß nur die entgegen dem Uhrzeigersinn wirksamen Anschlaglappen 28 vorhanden sind. Dann wird bei Drehmomentbeaufschlagung der Reibbeläge entgegen dem Uhrzeigerdrehsinn und bei festgehaltener Nabe 2 die zusätzliche Reibung für den Lastbereich dann einsetzen, wenn die entsprechenden Federn 8 an den Steuerkanten der Fenster 9 der Nabenscheibe 3 anliegen, die entgegen dem Uhrzeigersinn angeordnet sind. Bei zurückgehendem Drehmoment bleibt die zusätzliche Reibwirkung über die beiden Lastreibscheiben 26 und 27 solange erhalten, bis die Federn 8 von den Steuerkanten der Fenster 9 abheben. Von diesem Moment an werden beide Lastreibscheiben 26 und 27 infolge ihrer Reibkraft gegenüber Belagträger 4 und Deckblech 6 von diesen mitgenommen und leisten somit keinen Beitrag zur Reibkrafterzeugung mehr.

## Patentansprüche

1. Kupplungsscheibe für eine Kraftfahrzeug-Reibungskupplung, bestehend aus einer zu einer Drehachse konzentrischen Nabe mit Nabenscheibe, einem auf der einen Seite angeordneten Belagträger für die Reibbeläge, einem auf der anderen Seite angeordneten Deckblech, das mit dem Belagträger drehfest verbunden ist, Schraubenfedern für den Lastbereich, die in Fenstern der Nabenscheibe einerseits sowie von Belagträger und Deckblech andererseits angeordnet sind und mit einem Ende an Steuerkanten der Fenster von Belagträger und Deckblech, mit dem anderen Ende dagegen an Anschlaglappen von beidseitig der Nabenscheibe angeordneten Lastreibscheiben anliegen, von denen zumindest eine Stege zur Aufnahme der Anschlaglappen an einem ringförmigen Grundkörper aufweist, dadurch gekennzeichnet,
daß jeder Anschlaglappen (28) sowohl mit dem Steg (51) als auch mit einer hierzu winklig ausgerichteten Verstrebung (56) einstückig ausgebildet ist und im Angriffsbereich der Feder (8) einen Bereich (52) aufweist, der infolge seiner elastischen Verformbarkeit bei Krafteinleitung der Feder (8) in Anlage bringbar ist an einem zu diesem Bereich (52) in Umfangsrichtung des ringförmigen Grundkörpers (50) beabstandeten Bereich (53) der Verstrebung (56), so daß der beabstandete Bereich (53) der Verstrebung (56) bei Anlage des elastisch verformbaren Bereichs (52) eine Querschnittsverstärkung (57) des Anschlaglappens (28) bildet.

2. Kupplungsscheibe nach Anspruch 1,
dadurch gekennzeichnet,
daß an jedem Anschlaglappen (28) der Bereich (53) der Verstrebung (56) in radialer Richtung über die restliche Verstrebung (56) hinausragt, wobei dieser Bereich (53) zur Krafteinleitung vorgesehen ist.

3. Kupplungsscheibe nach Anspruch 1, dadurch gekennzeichnet, daß der Anschlaglappen (28) als elastisch verformbaren Bereich einen mit dem Steg (51) verbundenen ersten Lappenteil (52) und als Bereich der Verstrebung (56) einen einstückig mit dieser ausgebildeten, als Querschnittsverstärkung (57) wirksamen zweiten Lappenteil (53) aufweist, der gegenüber dem ersten Lappenteil (52) um einen zwischen 90° und 180° liegenden Winkel umgebogen ist.

4. Kupplungsscheibe nach Anspruch 1 und 3, dadurch gekennzeichnet, daß der Winkel zwischen den beiden Lappenteilen (52,53) nahezu 180° beträgt.

5. Kupplungsscheibe nach Anspruch 1, dadurch gekennzeichnet, daß die Verstrebung (56) an einer Lastreibscheibe (27) ausgebildet und als axiale Abstützung (30) für die andere Lastreibscheibe (26) verwendbar ist.

## Claims

1. Clutch plate for a motor vehicle friction clutch comprising a hub and hub disc concentric with an axis of rotation, a lining carrier for the friction linings arranged on the one side, a cover pressing arranged on the other side and connected to the lining carrier to rotate with it, coil springs for the load range, arranged in windows in the hub disc on the one hand as well as in the lining carrier and cover pressing on the other hand and engaging with one end against control edges of the windows in the lining carrier and cover pressing and with their other ends on the other hand against stop lugs in load friction discs arranged on both sides of the hub disc, at least one of the load friction discs having a web for receiving the stop lugs on a ring-shaped base body, characterised in that,
each stop lug (28) is made integral both with the web (51) and also with the bracing (56) which is directed at an angle to it and has in the region of engagement by the spring (8) a region (52) which, as a consequence of its elastic deformability on the application of a force by the spring (8) is brought into engagement against a region (53) of the bracing (56) spaced away with respect to this region (52) in the circumferential direction of the ring-shaped base body (50), so that the spaced-away region (53) of the bracing (56) forms, on engagement of the elastically deformable region (52), a reinforcement cross-section (57) of the stop lug (28).

2. Clutch plate according to claim 1,
characterised in that
on each stop lug (28) the region (53) of the bracing (56) projects in a radial direction beyond the remainder of the bracing (56), whereby this region (53) is provided for the application of force.

3. Clutch plate according to claim 1, characterised in that the stop lug (28) has as an elastically deformable region a first lug portion (52) connected to the web (51) and as a region of the bracing (56) a second lug portion (53) made integral with the latter and acting as a cross-section reinforcement (57) which is bent back with respect to the first lug portion (52) through an angle which lies between 90° and 180° .

4. Clutch plate according to claim 1 and 3, characterised in that the angle between the two lug portions (52, 53) amounts to almost 180°.

5. Clutch plate according to claim 1, characterised in that the bracing (56) is formed on one load friction disc (27) and is used as an axial abutment (30) for the other load friction disc (26).

## Revendications

1. Disque d'embrayage pour un embrayage à friction d'un véhicule automobile, constitué par un moyeu avec disque de moyeu, concentrique à un axe de rotation, par un support de garniture agencé sur un côté pour les garnitures à friction, par une tôle de recouvrement agencée de l'autre côté qui est reliée solidairement en rotation au support de garniture, par des ressorts hélicoïdaux pour le fonctionnement sous charge, lesquels sont agencés d'une part dans des fenêtres du disque de moyeu et d'autre part dans des fenêtres du support de garniture et de la tôle de recouvrement et s'appuient par une extrémité contre des arêtes de commande des fenêtres du support de garniture et de la tôle de recouvrement et par l'autre extrémité contre des pattes de butée des disques de friction actifs sous charge agencés des deux côtés du disque de moyeu, dont l'un au moins présente des barrettes pour recevoir les pattes de butée sur un corps de base annulaire, caractérisé en ce que chaque patte de butée (28) est réalisée en une seule pièce tant avec la barrette (51) qu'avec une entretoise (56) orientée sous un angle par rapport à celle-ci et présente dans la région d'attaque du ressort (8) une région (52) qui, par l'effet de sa déformabilité élastique lors d'une application de force du ressort (8), peut être amenée en appui contre une région (53) de l'entretoise (56), ladite région (53) étant écartée de la région (52) en direction périphérique du corps de base annulaire (50), de sorte que la région écartée (53) de l'entretoise (56) forme un renforcement de la section transversale (57) de la patte de butée (28) lors de l'appui de la région élastiquement déformable (52).

2. Disque d'embrayage selon la revendication 1, caractérisé en ce que la région (53) de l'entretoise (56) dépasse au niveau de chaque patte de butée (28) en direction radiale au-delà de la partie restante de l'entretoise (56), cette région (53) étant prévue pour l'application de force.

3. Disque d'embrayage selon la revendication 1, caractérisé en ce que la patte de butée (28) présente en tant que région élastiquement déformable une première partie de patte (52) reliée à la barrette (51), et en tant que région de l'entretoise (56) une seconde partie de patte (53) réalisée en une seule pièce avec celle-ci et agissant comme renforcement de la section transversale (57), ladite seconde partie de patte (53) étant repliée par rapport à la première partie de patte (52) d'un angle qui est compris entre 90° et 180°.

4. Disque d'embrayage selon les revendications 1 et 3, caractérisé en ce que l'angle entre les deux parties de patte (52, 53) s'élève approximativement à 180°.

5. Disque d'embrayage selon la revendication 1, caractérisé en ce que l'entretoise (56) est réalisée sur un disque de friction actif sous charge (27) et peut être utilisée comme appui axial (30) pour l'autre disque de friction actif sous charge (26).
